# EUROPÄISCHE PATENTANMELDUNG

(11) **EP 1 993 011 A1**
(43) Veröffentlichungstag der Anmeldung: **19.11.2008**
(21) Anmeldenummer: 08008744.8
(22) Anmeldetag: 09.05.2008
(51) Int. Cl.: G05B 19/042

(54) **Verfahren zum Bearbeiten von Werkstücken**

(30) Priorität: 11.05.2007 DE 102007022758
(71) Anmelder: Otto Martin Maschinenbau GmbH & Co. KG, 87724 Ottobeuren (DE)
(72) Erfinder: Martin, Peter, 87724 Ottobeuren (DE); Grupp, Markus, 89542 Herbrechtingen (DE)
(74) Vertreter: Schulz, Manfred

(57) **Zusammenfassung**

Die Erfindung betrifft ein Verfahren zum Bearbeiten von Werkstücken mit einer Holzbearbeitungsmaschine und sieht folgende Abfolge von Schritten vor
1. Auswahl eines Bearbeitungsprozesses aus einem Vorrat von Bearbeitungsprozessen,
2. Eingabe von Bearbeitungsmaßen,
3. aufgrund des gewählten Bearbeitungsprozesses und des eingegebenen Bearbeitungsmaße, Erstellung eines Bearbeitungsplanes unter Berücksichtigung der zur Verfügung stehenden Werkzeuge durch die Steuerung.

## Beschreibung

Die Erfindung betrifft ein Verfahren zum Bearbeiten von Werkstücken mit einer Holzbearbeitungsmaschine oder Tischfräse.

Exemplarisch wird nachfolgend die Erfindung auf eine Tischfräse Bezug nehmen, ohne dabei die Erfindung auf diesen speziellen Anwendungsfall beschränken zu wollen. Das bedeutet, dass alle im Zusammenhang mit der Tischfräse erläuterten Prinzipien, Vorgehensweisen und Techniken sinngemäß natürlich auch auf allgemeine Holzbearbeitungsmaschinen erweiterbar oder übertragbar sind. Das Gleiche gilt für die Schilderung des Standes der Technik, bei welcher auf eine Tischfräse zunächst Bezug genommen wird.

Tischfräsen besitzen eine in einer Tischöffnung angeordnetes, angetriebenes Bearbeitungswerkzeug. Die Tischfräsen besitzen des Weiteren einen im wesentlichen hierzu senkrecht zum Maschinentisch angeordneten Anschlag zur Bearbeitung von auf dem Tisch aufgelegten, am Anschlag angelegten und am Werkzeug vorbeigeführten Werkstücken aus Holz, Kunststoff und so weiter.

Im Stand der Technik sind Holzbearbeitungsmaschinen bekannt, bei welchen für immer wiederkehrende Standardaufgaben Routinen vorgesehen sind. So besitzen entsprechende Tischfräsen zum Beispiel für immer wiederkehrende Standardaufgaben Routinen für das Fälzen, Fasen, Nuten und so weiter.

Die bekannten Routinen sind aber sehr unflexibel, da sie neben einer Auswahl der Routine und der nachfolgenden Maßeingabe keine weiteren Einstellmöglichkeiten erlauben.

Aus den jeweiligen Standardaufgaben gekennzeichneten Parametern ermittelt der Bediener bisher manuell die Einstellwerte der Maschine und wählt anhand der Werkzeugparameter das passende Werkzeug aus. Diese manuelle Tätigkeit ist sowohl fehleranfällig als auch umständlich und aufwendig.

Die vorliegende Erfindung hat es sich zur Aufgabe gemacht den Stand der Technik zu verbessern, um eine möglichst komfortable Bedienung und Bearbeitung von Werkstücken zu erlauben.

Zur Lösung dieser Aufgabe geht die Erfindung aus von einem Verfahren wie eingangs beschrieben und schlägt die Abfolge folgender Schritte vor.

Zunächst wird ein Bearbeitungsprozeß aus einem Vorrat von verschiedenen Bearbeitungsprozessen ausgewählt. Hernach erfolgt eine Eingabe der Bearbeitungsmaße. Dann wird aufgrund des gewählten Bearbeitungsprozesses und der eingegebenen Bearbeitungsmaße mindestens ein Bearbeitungsplan erstellt und zwar unter Berücksichtigung der zur Verfügung stehenden Werkzeuge. Diese Erstellung der Bearbeitungsplanes erfolgt durch die Steuerung.

Die Erfindung erreicht eine erhebliche Arbeitserleichterung.

Der Bediener wählt zunächst, vorzugsweise graphisch, an der nach dem erfindungsgemäßen Verfahren arbeitende Holzbearbeitungsmaschine die von ihm gewünschte Standardaufgabe als Bearbeitungsprozess aus einem Vorrat von verschiedenen Bearbeitungsprozessen aus. Er gibt danach die notwendigen Parameter, also die Bearbeitungsmaße ein. Sind alle notwendigen Parameter vollständig eingegeben, so erstellt das Verfahren mindestens einen Bearbeitungsplan, wobei hierbei die der Holzbearbeitungsmaschine zur Verfügung stehenden Werkzeuge bezüglich deren Parameter bekannt sind. Es wird dabei nicht nur ein Bearbeitungsplan erstellt, sondern gegebenenfalls eine Mehrzahl, wenn es sich nämlich ergibt, dass eine Mehrzahl von Werkzeugen zu dem gewünschten Bearbeitungsergebnis führen können. Da die ganze Erstellung automatisch durch die Steuerung erfolgt, ist der Benutzer hiermit nicht belastet und kann sich anderen Aufgaben, wie zum Beispiel dem Herrichten des Werkstückes und so weiter, widmen. Er spart damit Zeit. Dabei grenzt das erfindungsgemäße Verfahren vorteilhafterweise alle nicht geeigneten Werkzeuge aus. Hierbei können zum Beispiel Kriterien sein:
- der zu bearbeitende Werkstoff, die Werkstoffeignung ist hierbei einer Werkzeugparameter, gegebenenfalls wird dies mit den Bearbeitungsmaßen eingegeben
- die Notwendigkeit der Bearbeitung auf einer der Planflächen des Werkzeuges,
- der minimale und maximale Durchmesser des Werkzeuges, beispielsweise bei der Bearbeitung einer Nut oder
- der minimale oder maximale axiale Abstand.

Das Verfahren zeigt dem Bediener dann die jeweiligen zur Verfügung stehenden Bearbeitungsprozesse beziehungsweise die jeweils dazu geeigneten Werkzeuge, bevorzugt aufsteigend sortiert nach der Zahl der notwendigen Arbeitsgänge an. Dabei wird natürlich versucht, das aktuell in der Holzbearbeitungsmaschine eingesetzte Werkzeug zu verwenden, um ein Umrüsten zu vermeiden.

Der Bediener wählt dann das von ihm gewünschte Werkzeug aus. Da der Bearbeitungsplan redundant mehrfach erstellt wird und zwar für verschiedene Bearbeitungswerkzeuge, kommt es in letzter Konsequenz nicht darauf an, mit welchem Bearbeitungswerkzeug die Bearbeitung durchgeführt wird. Im Stand der Technik wurde zwingend, aufgrund der Standardaufgabe, ein Werkzeug vorgeschrieben, war dieses nicht eingerüstet, musste entsprechende umgerüstet werden. Mit dem erfindungsgemäßen Verfahren aber hat der Anwender die Freiheit, ein Werkzeug frei auszuwählen. Das erfindungsgemäße Verfahren stellt die ausreichende Flexibiltät dar, auch mit vermeintlich nicht so gut geeigneten Werkzeugen trotzdem zu dem gewünschten Bearbeitungsergebnis zu kommen.

Die Erfindung erreicht eine erhebliche Steigerung der Flexibilität und einer bessere Werkzeugauslastung und spart in der Bearbeitung Zeit.

In einer bevorzugten Variante der Erfindung ist vorgesehen, dass für die Erstellung des Bearbeitungsplanes die Werkzeugparameter aus einem Werkzeugdatenspeicher ausgelesen werden.

Im Werkzeugdatenspeicher ist ein Katalog hinterlegt, der eine eindeutige Zuordnung der einzelnen Werkzeuge erlaubt. Die Werkzeuge selber tragen entsprechende Datenträger, um eine eindeutige Zuordnung zu erreichen. Als Datenträger dient zum Beispiel in der einfachsten Variante ein auf dem Werkzeug aufgeklebtes Etikett oder zum Beispiel eine handschriftlich vermerkte Werkzeugnummer, die dann durch den Benutzer in die Maschinensteuerung beziehungsweise in das Verfahren händisch eingegeben werden mues. Es ist aber auch möglich, dass das System diesbezüglich automatisch arbeitet, das bedeutet, dass der Datenträger zum Beispiel als Transponder (RFID-Chip) oder als Barcode ausgebildet ist, der ein automatisches Auslesen zum Beispiel über Funk oder optisch erlaubt.

In einer erfindungsgemäßen Variante der Erfindung ist vorgesehen, dass im Bearbeitungsplan pro einzusetzendem Bearbeitungswerkzeug beziehungsweise für jeden einzelnen von mehreren durchzuführenden Bearbeitungsschritten mit dem selben Bearbeitungswerkzeug Einstellwerte für das Bearbeitungswerkzeug sowie für das oder die Maschinenteil/e zugeordnet werden. Als Maschinenteile werden hierbei insbesondere ein Anschlag, der Auflagentisch und so weiter angesehen.

Das erfindungsgemäße Verfahren erstellt aus den eingangs gegebenen Informationen, nämlich dem ausgewählten Bearbeitungsprozess und den eingegebenen Bearbeitungsmaßen, die für die Bearbeitung notwendigen Detailinformationen, die in dem Bearbeitungsplan zusammengestellt werden. Dieser Plan wird um so umfangreicher, je komplizierter die Bearbeitungsprozesse sind. Weist die Holzbearbeitungsmaschine, an welcher das erfindungsgemäße verfahren eingesetzt wird, eine große Anzahl von beweglichen Achsen auf, die für Einstellzwecke dienen können, sind auch diese entsprechend zu berücksichtigen.

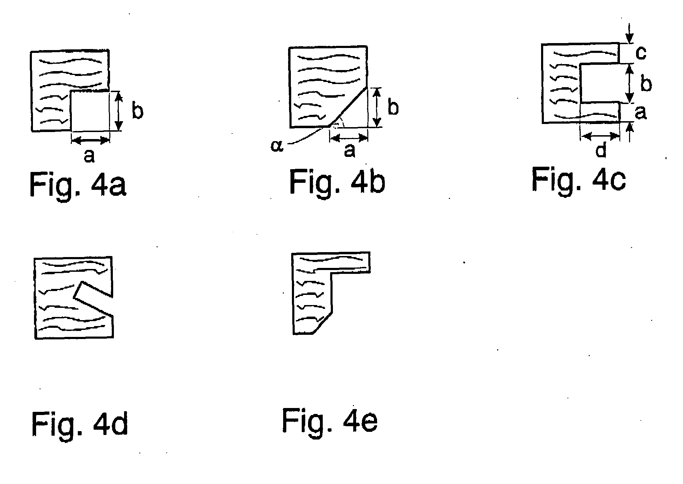

Von besonderem Vorteil ist, dass aufgrund des ausgewählten Bearbeitungsprozesses und der eingegebenen Bearbeitungsmaße eine Plausibilitätsprüfung durchgeführt wird. Gibt der Bediener beispielsweise bei der in Fig. 4b dargestellen Fase die Parameter a, b und α in dieser Reihenfolge ein, überschreibt der durch b und dem Winkel α errechnete, neue Wert von a den zuerst eingegebenen Wert a. Von Vorteil ist es dabei, dass dies dem Benutzer klar dargestellt wird, beispielsweise durch ein entsprechendes optisches Signal der neuen Berechnung, zum Beispiel ein Blinken des neuen Wertes a und der Bitte in der Eingabe, dies zu bestätigen.

Üblicherweise erfolgt nach Erstellung des Bearbeitungsplanes ein Einrüsten des für die Bearbeitung vorgesehenen Bearbeitungswerkzeuges in die Holzbearbeitungsmaschine.

Der Einrüstprozess läuft in der Regel händisch ab, da ein automatisches Werkzeugwechseln in solchen Fällen sehr viel teurer ist.

Ein wesentlicher Vorzug des Verfahrens ergibt sich dann, wenn nach Einrüsten eines Bearbeitungswerkzeuges in die Holzbearbeitungsmaschine aus mehreren Bearbeitungsplänen derjenige (oder diejenigen) ausgewählt wird, der das eingesetzte Bearbeitungswerkzeug aufweist. Dies ist ein zusätzlicher Vorteil bei der Bedienung der erfindungsgemäß ausgestatteten Holzbearbeitungsmaschine. Der Benutzer wird nicht nur bei der Ermittlung der notwendigen Bearbeitungsdaten entlastet, es ist auch (fast) egal, welches Bearbeitungswerkzeug er einsetzt beziehungsweise welches er zur Hand hat, da redundant eine Mehrzahl von Bearbeitungeplänen erstellt werden, wählt das erfindungsgemäße verfahren aus den verschiedenen zur Verfügung stehenden Plänen denjenige aus, bei welchem das Bearbeitungswerkzeug passend ist. Liegen mehrere Pläne mit jeweils dem gleichen Bearbeitungswerkzeug vor, wird derjenige mit dem geringsten Gesamtaufwand ausgewählt.

Natürlich wird geschickterweise in einer erfindungsgemäßen variante vorgesehen, dass überprüft wird, ob das eingerüstete Bearbeitungswerkzeug auch im Bearbeitungsplan beinhaltet ist. Es kann natürlich sein, dass der Bediener ein falsches Bearbeitungswerkzeug einbaut, das für den gewünschten Bearbeitungs-prozess nicht geeignet ist und eigentlich, wenn nun bearbeitet würde, Ausschuss produzieren würde. Diese wird von dem Verfahren rechtzeitig, nämlich vor der Bearbeitung, erkannt und dann durch die Steuerung entsprechend als Fehlermitteilung angezeigt.

Es ist dabei von Vorteil, dass der Datenträger ausgelesen werden kann. Diese erfindungsgemäße Variante ist aber auch bei einer manuellen Dateneingabe durch den Bediener ausnützbar.

Hernach erfolgt, dass gemäß dem gewählten Verfahren das Bearbeitungswerkzeug beziehungsweise die Holzbearbeitungsmaschine auf die für das eingerichtete Bearbeitungswerkzeug oder für den ersten Bearbeitungsschritt vorgesehene Einstellwerte positioniert wird/werden.

Je nach Komplexität der gewünschten Bearbeitung wird mit einem Bearbeitungswerkzeug vielleicht nur Bearbeitungsschritt oder auch eine Mehrzahl von Bearbeitungsschritten ausgeführt. Schritt für Schritt werden alle notwendigen Bearbeitungsschritte erledigt und dann gegebenenfalls ein neues Bearbeitungswerkzeug angefordert, bis die Bearbeitung abgeschlossen ist.

Günstigerweise ist im Verfahren vorgesehen, dass nach Abarbeitung des Bearbeitungsschrittes beziehungsweise nach Einrüsten des nachfolgenden Bearbeitungswerkzeuges eine "Erledigt"-Nachricht für den Bearbeitungsschritt generiert wird..

Das Generieren dieser "Erledigt"-Nachricht kann bei den einzelnen Bearbeitungsschritten von dem Anwender erfolgen, da den Abschluss der jeweiligen Bearbeitungsschritte ja entsprechend verfolgt und überwacht. Das Generieren kann aber auch automatisch erfolgen, wenn zum Beispiel ein neues Bearbeitungswerkzeug eingerüstet und erkannt wird. Der Vorteil dieser erfindungsgemäßen Variante liegt darin, dass der Benutzer gegebenenfalls bei Fehleinrüstungen des bereits abgearbeiteten Bearbeitungswerkzeuges entsprechend unterrichtet wird.

Geschickterweise ist des Weiteren vorgesehen, dass nach Erstellen des Bearbeitungsplanes beziehungsweise vor Beginn der Bearbeitung eine Kollisionsprüfung mit den ermittelten Einstellwerten durchgeführt wird.

Diese Kollisionsprüfung kann dabei imaginär auf Rechnerebene, also innerhalb der Steuerung mit entsprechenden Modellen passieren. Dies hat den Vorteil, dass der gesamte Bearbeitungsplan diesbezüglich überprüft werden kann, ohne die Werkzeuge tatsächlich einrüsten zu müssen.

Alternativ ist es aber auch möglich, dass diese Kollisionsprüfung auch tatsächlich physisch durchgeführt wird, zum Beispiel durch vorsichtiges Anfahren der jeweiligen Einstellwerte bei nicht eingeschalteten Bearbeitungswerkzeug. Kommt es zu einer Blockade, so wird eine Kollision angenommen und eine entsprechende Maß- oder Positionserreichung ist nicht möglich, was entsprechend detektiert werden kann.

Geschickterweise wird dabei das Verfahren in Kenntnis über die geometrische Lage aller möglichen Kollisionspunkte oder kollisonsgefährdeten Einheiten der Holzbearbeitungsmaschine und der Bearbeitungseinheit, gebildet von einer Antriebsspindel, einem Aufspanndorn und dem Werkzeug, durchgeführt.

Durch die für das erfindungsgemäße Verfahren notwendigen Eingaben, nämlich der Maße und des jeweiligen Bearbeitungsprozesses, sind die Informationen zur Durchführung der Kollisionsprüfung bereits vorhanden. Bereits vor der Einleitung des vorzugsweise vollautomatischen Vorganges zur Positionierung der beteiligten Achsen, kann ein erfindungsgemäßes Verfahren die Gefahren möglicher Kollisionen während der Positionierung durch geometrische Berechnungen erkennen und den Start des Positioniervorganges mit entsprechender Fehlermeldung verhindern.

Des Weiteren betrifft die Erfindung auch eine Holzbearbeitungs-maschine oder eine Tischfräse zur Durchführung eines Verfahrens wie vorher beschrieben.

Insbesondere ist für die Durchführung des Verfahrens eine Bearbeitungssteuerung vorgesehen, die als eigenständige Steuerung neben der Maschinensteuerung oder als Teil der Maschinensteuerung ausgebildet ist.

Unter Umständen ist der Rechenaufwand zur Erstellung des Bearbeitungsplanes verhältnismäßig groß, weswegen geschickterweise das erfindungsgemäße Verfahren in einer separaten Bearbeitungssteuerung ausgeführt wird. Natürlich eröffnet die Erfindung auch die Möglichkeit, entsprechend leistungsstärkere Maschinensteuerungen auch zur Durchführung des Verfahrens nach der Erfindung einzusetzen. Beide Varianten gehören zur Erfindung.

Geschickterweise weist die Holzbearbeitungsmaschine einen Werkzeugdatenspeicher für die einsetzbaren Bearbeitungswerkzeuge auf. Dabei umfasst der Werkzeugdatenspeicher Werkzeugparameter, wie Werkstoffeignung, Abmessung, Anordnung der zu schneidenden Flächen usw. der einzelnen Bearbeitungswerkzeuge. Mit Hilfe einer möglichst umfangreichen Beschreibung der einzelnen Bearbeitungswerkzeuge wird natürlich die Flexibilität gesteigert, da sich aufgrund der großen Anzahl von Werkzeugparametern eine Vielzahl von verschiedenen Realisierungswegen für den ausgewählten Bearbeitungsprozess bei den eingegebenen Bearbeitungsmaßen ergeben.

Ein besonderer Vorzug der Erfindung liegt insbesondere darin, dass oftmals bei mehreren erfindungsgemäß ausgebildeten Holzbearbeitungsmaschinen nur ein Satz von Bearbeitungswerkzeugen eingesetzt wird, die dann unter den verschiedenen Holzbearbeitungsmaschinen ausgetauscht werden. Tatsächlich verfügbar ist aber dann nur ein geringer Anteil der Bearbeitungswerkzeuge an der Holzbearbeitungsmaschine, wo eine Bearbeitung stattfinden soll. Der Benutzer wird durch das erfindungsgemäße Verfahren beziehungsweise der erfindungsgemäß ausgestatteten Holzbearbeitungsmaschine entlastet, ein spezielles Bearbeitungswerkzeug zu suchen, da erfindungsgemäß mehrere Bearbeitungspläne mit jeweils unterschiedlichen Bearbeitungswerkzeugen bevorzugt erstellt werden.

Günstigerweise ist vorgesehen, dass die Holzbearbeitungsmaschine einen Positionsantrieb für das Bearbeitungswerkzeug, zumindest entlang einer Längs- und/oder Verschwenkachse aufweist. Natürlich besitzt die Maschine eine noch höhere Beweglichkeit, mindestens aber besitzt sie zumindest eine Längs- oder Verschwenkachse.

Neben dem Positionsantrieb für das Bearbeitungswerkzeug sind natürlich auch Positionsantriebe für die beweglichen Maschinenteile, wie zum Beispiel für die Anschläge, Auflagetische usw., vorgesehen. Die Steuerung wirkt, nachdem das erfindungsgemäße Verfahren den Bearbeitungsplan erstellt hat und das Bearbeitungswerkzeug eingelegt ist, entsprechend auf die Positionsantriebe, um die erfindungsgemäße Holzbearbeitungsmaschine für die Bearbeitung vorzubereiten und diese dann durchzuführen. Hierzu wird die im Bearbeitungsverfahren ermittelten Einstellwerte für das Bearbeitungswerkzeug beziehungsweise das Maschinenteil vor Abarbeitung eines Bearbeitungsschrittes an die Maschinensteuerung zur Ansteuerung der jeweiligen Positionsantriebe übertragen.

In diesem Zusammenhang wird insbesondere darauf hingewiesen, dass alle im Bezug auf die erfindungsgemäße Holzbearbeitungsmaschine beschriebenen Merkmale und Eingenschaften, aber auch Verfahrensweisen sinngemäß auch bezüglich der Formulierung des erfindungsgemäßen Verfahrens übertragbar und im Sinne der Erfindung einsetzbar und als mit offenbart gelten. Gleiches gilt auch in umgekehrter Richtung, das bedeutet, nur im Bezug auf das Verfahren genannte, bauliche, also Merkmale der Holzbearbeitungsmaschine können auch im Rahmen der Ansprüche für die Holzbearbeitungsmaschine berücksichtigt und beansprucht werden und zählen ebenfalls zur Erfindung und zur Offenbarung.

In der Zeichnung ist die Erfindung schematisch dargestellt.

Es zeigen:
- Fig. 1: in einer Seitenansicht eine erfindungsgemäße Holzbearbeitungsmaschine,
- Fig. 2, 3: jeweils in einer Seitenansicht verschiedene Varianten des Bearbeitungswerkzeuges mit einem Antrieb nach der Erfindung,
- Fig. 4a bis 4e: die schematische Darstellung verschiedener Bearbeitungsprozesse nach der Erfindung.

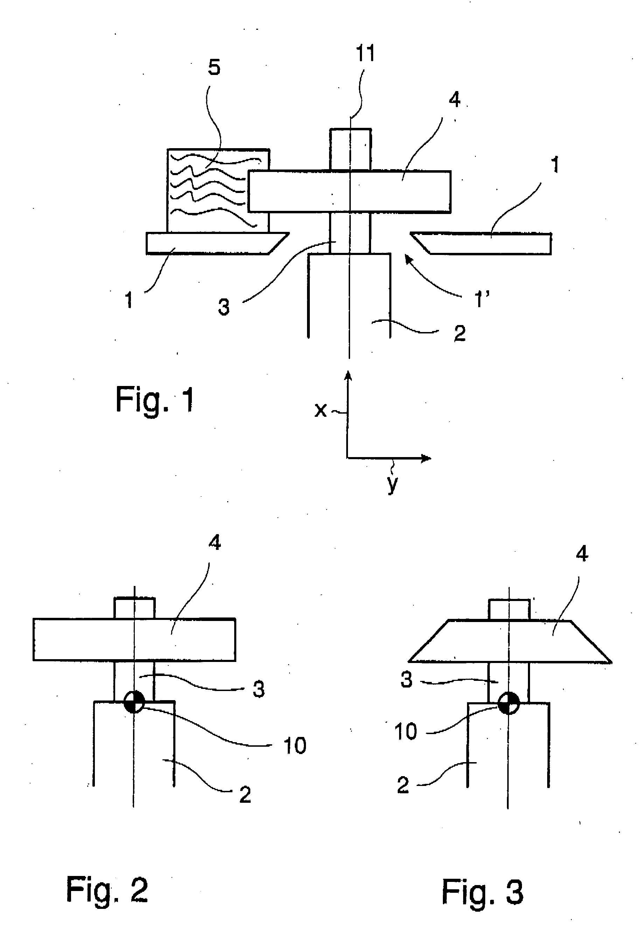

Fig. 1 zeigt eine beispielhaft im Stand der Technik bekannte Holzbearbeitungsmaschine, die insbesondere als Tischfräse ausgebildet ist. Sie besteht aus einem Tisch 1, auf welchem ein Werkstück 5 aufliegt und von einem Bearbeitungswerkzeug 4 bearbeitet wird. Das Bearbeitungswerkzeug 4 wird von einer Antriebsspindel 2 rotatorisch um die Bewegungsachse 11 angetrieben. Dabei sitzt das Bearbeitungswerkzeug 4 auf einem Spanndorn 3 und ist dort gehalten.

Des Weiteren weist der Tisch 1 eine Tischöffnung 1' auf, durch welche die Antriebsspindel 2 mit dem Bearbeitungswerkzeug 4 hervorsteht.

Um die verschiedenen Bearbeitungsprozesse ausführen zu können, ist das Bearbeitungswerkzeug 4 in der Blattebene beweglich gelagert, was durch die beiden rechtwinklig angeordneten Pfeile X und Y angedeutet ist. Zusätzlich ist das Bearbeitungswerkzeug 4 auch um eine zur Ebene X, Y senkrechte Schwenkachse 10 schwenkbar.

In Fig. 2, 3 sind relativ verschiedene Bearbeitungswerkzeuge 4 gezeigt, die erfindungsgemäß eingesetzt werden können.

In Fig. 4a bis 4e sind verschiedene Bearbeitungsprozesse skizzenhaft vorgesehen. Die in Fig. 4a bis 4e gezeigten Querschnitte von entsprechend bearbeiteten Werkstücken stellt zum Beispiel einen Vorrat der verschiedenen Bearbeitungsprozesse nach dem erfindungsgemäßen Verfahren dar. Dieser Vorrat ist exemplarisch und nicht abschließend.

Fig. 4a zeigt zum Beispiel einen im wesentlichen L-förmigen Querschnitt der durch Herausfräsen eines Eckbereiches realisiert wurde. Die Bearbeitungsmaße a und b sind in das erfindungsgemäße Verfahren einzugeben.

Fig. 4b, eine Fase, ist als Beispiel für eine redundante Dateneingabe bereits erwähnt worden. Durch das Maß a und den schrägen Winkel α ergibt sich das Maß b.

Fig. 4c zeigt eine längsverlaufende Nut der Breite b und der Tiefe d mit dem Randabstand a und c. Relevante Bearbeitungsmaße sind zum Beispiel die Tiefe d, die Breite b und der untere Rand a.

Es ist klar, dass die verschiedenen Bearbeitungsprozesse beliebig gestaltbar und auch komplizierbar sind, wie dies zum Beispiel auch noch in Fig. 4d und 4e angedeutet ist. Aufgrund des nach Fig. 4a bis 4e ausgewählten Bearbeitungsprozesses und der dabei eingegebenen Bearbeitungswerte erstellt das erfindungsgemäße Verfahren mindestens einen Bearbeitungsplan und lässt, wenn zumindest ein weiterer Bearbeitungsplan zur Verfügung steht, dem Anwender die Wahl mit welchem Bearbeitungswerkzeug (zum Beispiel nach Fig. 2 oder 3 usw.) die Bearbeitung durchgeführt werden soll.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Verfahren zum Bearbeiten von Werkstücken mit einer Holzbearbeitungsmaschine, wie zum Beispiel eine Tischfräse, **gekennzeichnet durch** die Abfolge folgender Schritte:
a) Auswahl eines Bearbeitungsprozesses aus einem Vorrat von verschiedenen Bearbeitungsprozessen;
b) Eingabe von Bearbeitungsmaßen;
c) Aufgrund des gewählten Bearbeitungsprozesses und der eingegebenen Bearbeitungsmaße folgt die Erstellung mindestens eines Bearbeitungsplanes, unter Berücksichtigung der zur Verfügung stehenden Werkzeuge **durch** die Steuerung.

2. Verfahren nach Anspruch 1, **dadurch gekennzeichnet, dass** für die Erstellung des Bearbeitungsplanes die Werkzeugparameter aus einem Werkzeugdatenspeicher ausgelesen werden.

3. verfahren nach einem oder beiden der vorhergehenden Ansprüche, **dadurch gekennzeichnet, dass** im Bearbeitungsplan pro einzusetzendem Bearbeitungswerkzeug beziehungsweise für jeden einzelnen von mehreren durchzuführenden Bearbeitungsschritten mit demselben Bearbeitungswerkzeug Einstellwerte für das Bearbeitungswerkzeug sowie für das mindestens eine Maschinenteil (insbesondere Anschlag, Auflagetisch und so weiter) zugeordnet werden.

4. Verfahren nach einem oder mehreren der vorhergehenden Ansprüche, **dadurch gekennzeichnet, dass** aufgrund des ausgewählten Bearbeitungsprozesses und der eingegebenen Bearbeitungsmaße eine Plausibilitätsprüfung durchgeführt wird und/oder nach Erstellung des Bearbeitungsplanes ein für die Bearbeitung vorgesehenes Bearbeitungswerkzeug in die Bearbeitungsmaschine eingerüstet wird.

5. Verfahren nach einem oder mehreren der vorhergehenden Ansprüche, **dadurch gekennzeichnet, dass** das Verfahren nach Einrüstung eines Bearbeitungswerkzeuges aus mehreren Bearbeitungsplänen denjenigen auswählt, der das eingerüstete Bearbeitungswerkzeug aufweist.

6. verfahren nach einem oder mehreren der vorhergehenden Ansprüche, **dadurch gekennzeichnet, dass** überprüft wird, ob das eingerüstete Bearbeitungswerkzeug auch im Bearbeitungsplan beinhaltet ist und/oder das Bearbeitungswerkzeug beziehungsweise die Bearbeitungsmaschine auf die für das eingerichtete Bearbeitungswerkzeug oder für den ersten Bearbeitungsschritt vorgesehenen Einstellwerte positioniert wird/werden.

7. Verfahren nach einem oder mehreren der vorhergehenden Ansprüche, **dadurch gekennzeichnet, dass** nach Abarbeitung des Bearbeitungsschrittes beziehungsweise nach Einrüsten des nachfolgenden Bearbeituzxgswerkzeuges eine "Erledigt"-Nachricht für den Bearbeitungsschritt generiert wird.

8. verfahren nach einem oder mehreren der vorhergehenden Ansprüche, **dadurch gekennzeichnet, dass** nach Erstellen des Bearbeitungsplanes beziehungsweise vor Beginn der Bearbeitung eine Kollisionsprüfung mit den ermittelten Einstellwerten durchgeführt wird.

9. Holzbearbeitungsmaschine zur Durchführung eines Verfahrens nach einem oder mehreren oder vorhergehenden Ansprüche.

10. Holzbearbeitungsmaschine nach Anspruch 9, **dadurch gekennzeichnet, dass** für die Durchführung des Verfahrens eine Bearbeitungssteuerung vorgesehen ist, die als eigenständige Steuerung neben der Maschinensteuerung oder als Teil der Maschinensteuerung ausgebildet ist.

11. Holzbearbeitungsmaschine nach einem oder beiden der vorhergehenden Ansprüche 9 und 10, **dadurch gekennzeichnet, dass** die Holzbearbeitungsmaschine einen Werkzeugdatenspeicher für die einsetzbaren Bearbeitungswerkzeuge aufweist, welcher die Werkzeugparameter wie Werkstoffeignung, Abmessungen, Anordnung der zu schneidenden Flächen und so weiter der einzelnen Bearbeitungswerkzeuge aufweist.

12. Holzbearbeitungsmaschine nach einem oder mehreren der vorhergehenden Ansprüche 9 bis 11, **gekennzeichnet durch** einen Positionsantrieb für das Bearbeitungswerkzeug zumindest entlang einer Längs- und/oder Verschwenkachse.

13. Holzbearbeitungsmaschine nach einem oder mehreren der vorhergehenden Ansprüche 9 bis 12, **gekennzeichnet durch** Positionsantriebe für die beweglichen Maschinenteile wie zum Beispiel Anschläge, Auflagetische und so weiter.

14. Holzbearbeitungsmaschine nach einem oder mehreren der vorhergehenden Ansprüche 9 bis 13, **dadurch gekennzeichnet, dass** die im Bearbeitungsverfahren ermittelten Einstellwerte für das Bearbeitungswerkzeug und/oder Maschinenteil vor Abarbeitung eines Bearbeitungsschrittes an die Maschinensteuerung zur Ansteuerung der jeweiligen Posztionsantriebe übertragen werden.

15. Holzbearbeitungsmaschine nach einem oder mehreren der vorhergehenden Ansprüche 9 bis 13, **dadurch gekennzeichnet, dass** als Holzbearbeitungsmaschine eine Tischfräse vorgesehen ist.
